# EUROPEAN PATENT SPECIFICATION

(11) **EP 4 300 463 B1**
(45) Date of publication and mention of the grant of the patent: **18.11.2026**
(21) Application number: 23203870.3
(22) Date of filing: 11.06.2021
(51) Int. Cl.: G08G 1/16

(54) **SADDLE-TYPE VEHICLE CONTROL APPARATUS, RIDER ASSISTANCE SYSTEM, AND SADDLE-TYPE VEHICLE CONTROL METHOD**
SATTELFAHRZEUGSTEUERUNGSVORRICHTUNG, FAHRERUNTERSTÜTZUNGSSYSTEM UND SATTELFAHRZEUGSTEUERUNGSVERFAHREN
APPAREIL ET PROCÉDÉ DE COMMANDE DE VÉHICULE DE TYPE À SELLE, ET SYSTÈME D'ASSISTANCE AU CONDUCTEUR

(30) Priority: 26.06.2020 JP 2020110090
(43) Date of publication of application: 03.01.2024
(62) Document number(s) of the earlier application(s) in accordance with Art. 76 EPC: 21743566.8 / 4 173 920
(73) Proprietor: Robert Bosch GmbH, 70469 Stuttgart (DE)
(72) Inventor: PFAU, Lars, Yokohama-shi, Kanagawa, 224-8501 (JP)

(56) References cited:
- WO-A1-2017/115371
- DE-A1- 102013 218 458
- JP-A- 2019 099 033
- US-A1- 2021 162 998

## Description

### Technical Field

The present invention relates to a controller for a straddle-type vehicle, to which at least one surrounding environment detector is mounted, a rider-assistance system including such a controller, and a control method for a straddle-type vehicle, to which at least one surrounding environment detector is mounted.

### Background Art

As a conventional straddle-type vehicle, a straddle-type vehicle, to which a surrounding environment detector is mounted, is available. Information on a target that is located in front of the straddle-type vehicle on a travel line thereof is acquired on the basis of output of the surrounding environment detector (for example, see PTL 1).

### Citation List

### Patent Literature

PTL 1: JP-A-2009-116882
PTL 2: DE 10 2013 218458 A1
PTL 3: JP 2019 099033 A
PTL 4: WO 2017/115371 A1

### Summary of Invention

### Technical Problem

The straddle-type vehicle is much smaller than other vehicles (for example, a passenger car, a truck, and the like) . For this reason, the straddle-type vehicle can make special travel that is not assumed by the other vehicles. On the other hand, in the conventional straddle-type vehicle, the information on the target that is located in front of the straddle-type vehicle on the travel line thereof is acquired on the basis of the output of the surrounding environment detector. There is a possibility that the special travel made by the straddle-type vehicle cannot appropriately be handled with such information.

The present invention has been made with the above-described problem as the background and therefore obtains a controller capable of handling special travel made by a straddle-type vehicle. The present invention also obtains a rider-assistance system including such a controller. The present invention further obtains a control method capable of handling special travel made by a straddle-type vehicle.

### Solution to Problem

The present invention is set out by the appended claims.

A controller according to the present invention is provided, as defined by independent claim 1. The controller for a straddle-type vehicle, to which at least one surrounding environment detector is mounted, includes: an execution section that executes rider-assistance operation to assist with a rider of the straddle-type vehicle, and further includes: an acquisition section that acquires left target information and right target information on the basis of output of the surrounding environment detector, the left target information being information on a target that is located on a left side of a travel line of the straddle-type vehicle and the right target information being information on a target that is located on a right side of the travel line; and an analysis section that analyzes a travel state of the straddle-type vehicle on the basis of at least one of the left target information and the right target information that are acquired by the acquisition section. The analysis section analyzes, as the travel state, a travel position of the straddle-type vehicle in a lane, and a shift direction and a shift amount of the travel position from a center of the lane, on the basis of the left target information and the right target information that are acquired by the acquisition section. The execution section executes the rider-assistance operation that corresponds to an analysis result of the travel state by the analysis section. The execution section shifts an area used for the rider-assistance operation within a detection range of the surrounding environment detector according to the shift direction and the shift amount of the travel position from the center of the lane.

A rider-assistance system according to the present invention includes the above-described controller.

A control method according to the present invention is provided as defined by independent claim 10. The control method for a straddle-type vehicle, to which at least one surrounding environment detector is mounted, includes an execution step in which an execution section of a controller executes rider-assistance operation to assist with a rider of the straddle-type vehicle, and further includes: an acquisition step in which an acquisition section of the controller acquires left target information and right target information on the basis of output of the surrounding environment detector, the left target information being information on a target that is located on a left side of a travel line of the straddle-type vehicle and the right target information being information on a target that is located on a right side of the travel line; and an analysis step in which an analysis section of the controller analyzes a travel state of the straddle-type vehicle on the basis of at least one of the left target information and the right target information that are acquired in the acquisition step. In the analysis step, the analysis section analyzes, as the travel state, a travel position of the straddle-type vehicle in a lane, and a shift direction and a shift amount of the travel position from a center of the lane, on the basis of the left target information and the right target information that are acquired by the acquisition section. In the execution step, the execution section executes the rider-assistance operation that corresponds to an analysis result of the travel state in the analysis step. In the execution step, the execution section shifts an area used for the rider-assistance operation within a detection range of the surrounding environment detector according to the shift direction and the shift amount of the travel position from the center of the lane.

### Advantageous Effects of Invention

In the controller, the rider-assistance system, and the control method according to the present invention, the left target information, which is the information on the target located on the left side of the travel line of the straddle-type vehicle, and the right target information, which is the information on the target located on the right side of the travel line, are acquired on the basis of the output of the at least one surrounding environment detector, the travel state of the straddle-type vehicle is analyzed on the basis of at least one of the left target information and the right target information, and the rider-assistance operation corresponding to the analysis result is executed. Therefore, it is possible to appropriately handle special travel made by the straddle-type vehicle.

### Brief Description of Drawings

Fig. 1 is a view illustrating a mounted state of a rider-assistance system according to an embodiment of the present invention to a straddle-type vehicle.
Fig. 2 is a diagram illustrating a system configuration of the rider-assistance system according to the embodiment of the present invention.
Fig. 3 is a view illustrating a detection state of a surrounding environment detector in the rider-assistance system according to the embodiment of the present invention in a situation where the straddle-type vehicle travels between rows of vehicles.
Fig. 4 is a view illustrating the detection state of the surrounding environment detector in the rider-assistance system according to the embodiment of the present invention in a situation where the straddle-type vehicle travels in a group.
Fig. 5 is a view illustrating the detection state of the surrounding environment detector in the rider-assistance system according to the embodiment of the present invention in a situation where the straddle-type vehicle travels on one side in a lane.
Fig. 6 is a chart illustrating an operation flow of a controller in the rider-assistance system according to the embodiment of the present invention.

### Description of Embodiments

A description will hereinafter be made on a controller, a rider-assistance system, and a control method according to the present invention with reference to the drawings.

Each of a configuration, operation, and the like, which will be described below, is merely one example, and the controller, the rider-assistance system, and the control method according to the present invention are not limited to a case with such a configuration, such operation, and the like.

For example, a description will hereinafter be made on a case where the rider-assistance system according to the present invention is used for a two-wheeled motor vehicle. However, the rider-assistance system according to the present invention may be used for a straddle-type vehicle other than the two-wheeled motor vehicle. Examples of the straddle-type vehicle are motorcycles (the two-wheeled motor vehicle and a three-wheeled motor vehicle), an all-terrain vehicle, and a pedal-driven vehicle. The motorcycles include: a vehicle that has an engine as a propelling source; a vehicle that has an electric motor as the propelling source; and the like, and examples of the motorcycle are a bike, a scooter, and an electric scooter. The pedal-driven vehicle means a vehicle in general that can travel forward on a road by a depression force applied to pedals by a rider. The pedal-driven vehicles include a normal pedal-driven vehicle, an electrically-assisted pedal-driven vehicle, an electric pedal-driven vehicle, and the like.

The same or similar description will appropriately be simplified or will not be made below. In the drawings, the same or similar portions will be denoted by the same reference sign or will not be denoted by a reference sign. In addition, a detailed structure will appropriately be illustrated in a simplified manner or will not be illustrated.

### Embodiment

A description will hereinafter be made on a rider-assistance system according to an embodiment.

### <Configuration of Rider-Assistance System>

A description will be made on a configuration of the rider-assistance system according to the embodiment.

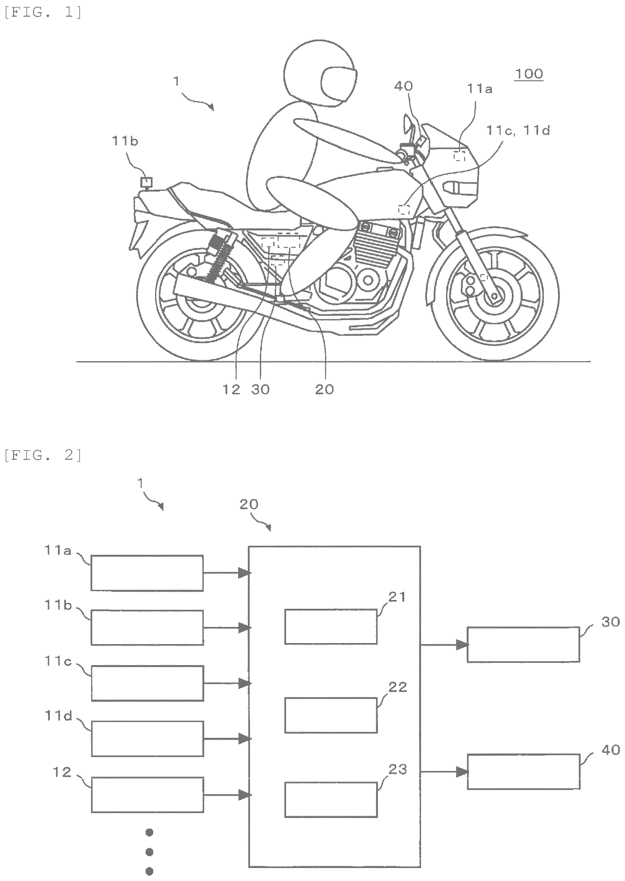

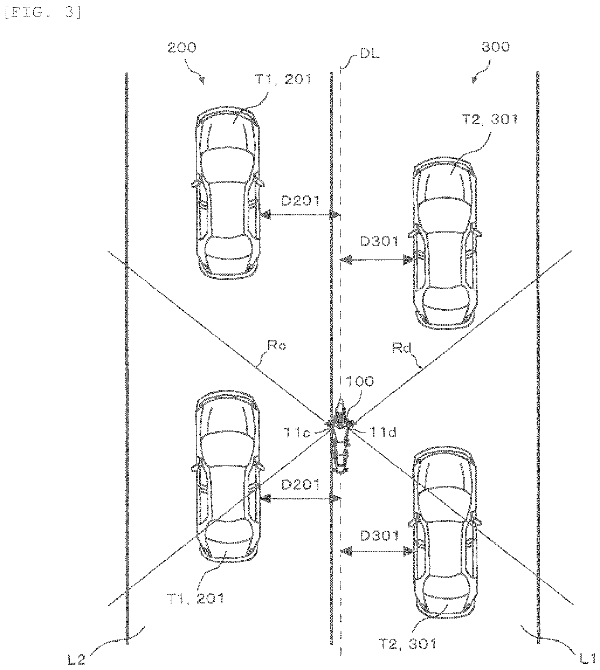

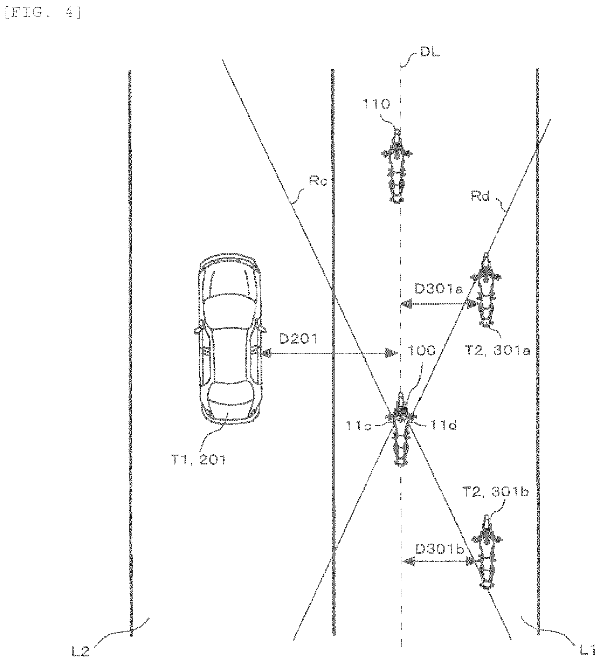

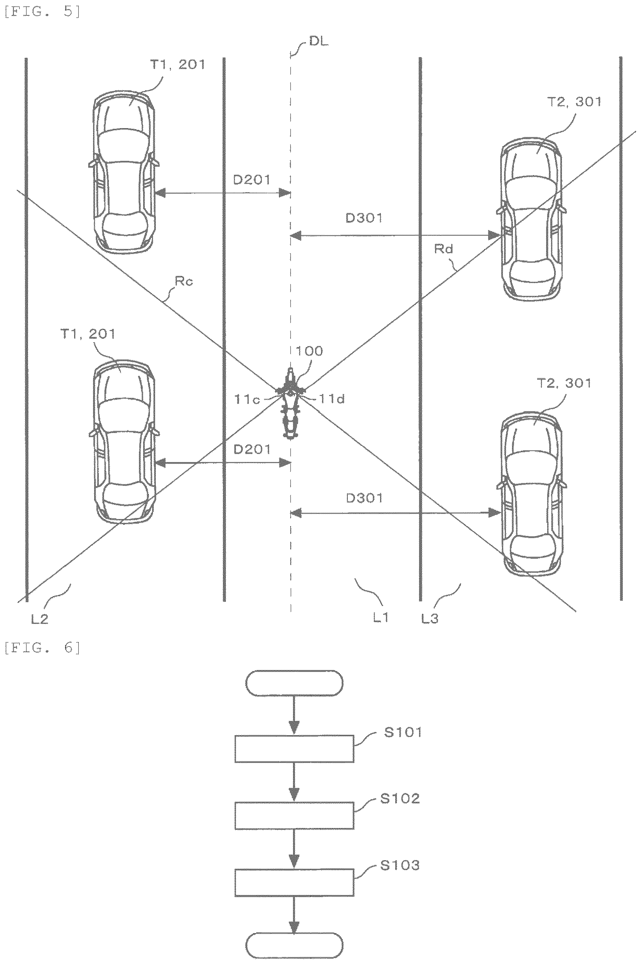

Fig. 1 is a view illustrating a mounted state of the rider-assistance system according to the embodiment of the present invention to a straddle-type vehicle. Fig. 2 is a diagram illustrating a system configuration of the rider-assistance system according to the embodiment of the present invention. Fig. 3 is a view illustrating a detection state of a surrounding environment detector in the rider-assistance system according to the embodiment of the present invention in a situation where the straddle-type vehicle travels between rows of vehicles. Fig. 4 is a view illustrating the detection state of the surrounding environment detector in the rider-assistance system according to the embodiment of the present invention in a situation where the straddle-type vehicle travels in a group. Fig. 5 is a view illustrating the detection state of the surrounding environment detector in the rider-assistance system according to the embodiment of the present invention in a situation where the straddle-type vehicle travels on one side in a lane.

As illustrated in Fig. 1 to Fig. 5, a rider-assistance system 1 is mounted to a straddle-type vehicle 100. The rider-assistance system 1 includes: a surrounding environment detector 11a that outputs surrounding environment information on environment in front of the straddle-type vehicle 100; a surrounding environment detector 11b that outputs surrounding environment information on environment behind the straddle-type vehicle 100; a surrounding environment detector 11c that outputs surrounding environment information on environment on a left side of the straddle-type vehicle 100; a surrounding environment detector 11d that outputs surrounding environment information on environment on a right side of the straddle-type vehicle 100; a travel state detector 12 that outputs travel state information on the straddle-type vehicle 100; and a controller (ECU) 20.

The rider-assistance system 1 executes rider-assistance operation to assist with a rider of the straddle-type vehicle 100 by using the surrounding environment information that is output from the surrounding environment detectors 11a, 11b, 11c, 11d when necessary. The controller 20 receives detection results by various detectors (not illustrated) that output other types of information (for example, information on a brake operation state by the rider, information on an accelerator operation state by the rider, and the like) when necessary. Each of the devices in the rider-assistance system 1 may exclusively be used for the rider-assistance system 1, or may be shared with another system.

Each of the surrounding environment detectors 11a, 11b, 11c, 11d is a radar, a Lidar sensor, an ultrasonic sensor, a camera, or the like, for example. The surrounding environment detector 11a is provided to a front portion of the straddle-type vehicle 100 and faces a front side on a travel line DL of the straddle-type vehicle 100. The surrounding environment detector 11b is provided to a rear portion of the straddle-type vehicle 100 and faces a rear side on the travel line DL of the straddle-type vehicle 100. The surrounding environment detector 11c is provided to a lateral portion of the straddle-type vehicle 100 and faces a left side of the travel line DL of the straddle-type vehicle 100. The surrounding environment detector 11d is provided to a lateral portion of the straddle-type vehicle 100 and faces a right side of the travel line DL of the straddle-type vehicle 100. The single surrounding environment detector 11c may be provided. Alternatively, both of the surrounding environment detector 11c that has a detection range Rc on a diagonal front side of the straddle-type vehicle 100 and the other surrounding environment detector 11c that has the detection range Rc on a diagonal rear side of the straddle-type vehicle 100 may be provided. The single surrounding environment detector 11d may be provided. Alternatively, both of the surrounding environment detector 11d that has a detection range Rd on a diagonal front side of the straddle-type vehicle 100 and the other surrounding environment detector 11d that has the detection range Rd on a diagonal rear side of the straddle-type vehicle 100 may be provided. In addition, at least a part of each of the surrounding environment detector 11c and the surrounding environment detector 11d may be substituted by the surrounding environment detector 11a or the surrounding environment detector 11b. Here, the travel line DL is a swept path of the straddle-type vehicle 100 in the past or the future.

The travel state detector 12 includes a vehicle speed sensor and an inertia sensor (IMU). The vehicle speed sensor detects a vehicle speed generated on the straddle-type vehicle 100. The inertia sensor detects three-axis acceleration and three-axis (roll, pitch, and yaw) angular velocities generated on the straddle-type vehicle 100. The travel state detector 12 may detect other physical quantities that can substantially be converted to the vehicle speed generated on the straddle-type vehicle 100, the three-axis acceleration generated on the straddle-type vehicle 100, and the three-axis angular velocities generated on the straddle-type vehicle 100. In addition, the inertia sensor may partially detect the three-axis acceleration and the three-axis angular velocities. Furthermore, when necessary, at least one of the vehicle speed sensor and the inertia sensor may not be provided, or another sensor may be added.

The controller 20 at least includes an acquisition section 21, an analysis section 22, and an execution section 23. The sections of the controller 20 may collectively be provided in a single casing or may separately be provided in multiple casings. In addition, the controller 20 may partially or entirely be constructed of a microcomputer, a microprocessor unit, or the like, may be constructed of a member in which firmware or the like can be updated, or may be a program module or the like that is executed by a command from a CPU or the like, for example.

The acquisition section 21 acquires information on a target that is located around the straddle-type vehicle 100 on the basis of the output of the surrounding environment detectors 11a, 11b, 11c, 11d. In particular, the acquisition section 21 acquires left target information and right target information. The left target information is information on a target T1 that is located on a left side of the travel line DL of the straddle-type vehicle 100, and the right target information is information on a target T2 that is located on a right side of the travel line DL thereof. The analysis section 22 analyzes a travel state of the straddle-type vehicle 100 on the basis of at least one of the left target information and the right target information. The execution section 23 executes the rider-assistance operation that corresponds to an analysis result of the travel state by the analysis section 22.

As an example, as illustrated in Fig. 3, in a situation where the straddle-type vehicle 100 travels between rows of vehicles, that is, travels between a left row of vehicles 200 and a right row of vehicles 300, the acquisition section 21 acquires the left target information and the right target information on the basis of the output of the surrounding environment detectors 11c, 11d. The left target information is the information on the target T1 that is located on the left side of the travel line DL of the straddle-type vehicle 100, and the right target information is the information on the target T2 that is located on the right side of the travel line DL of the straddle-type vehicle 100. As the left target information, information on a relative distance D201 of a vehicle 201, which travels on the left side of the straddle-type vehicle 100, to the straddle-type vehicle 100 is acquired. As the right target information, information on a relative distance D301 of a vehicle 301, which travels on the right side of the straddle-type vehicle 100, to the straddle-type vehicle 100 is acquired. As the information on the relative distances D201, D301, the acquisition section 21 may acquire distances in a vehicle width direction of the straddle-type vehicle 100, may acquire distances at specified angles with respect to the vehicle width direction thereof, may acquire distances from a center of the straddle-type vehicle 100 in the vehicle width direction, may acquire distances from lateral surfaces of the straddle-type vehicle 100, may acquire distances to lateral surfaces of the vehicles 201, 301, may acquire distances to centers of the vehicles 201, 301 in vehicle width directions thereof, or may acquire other physical quantities that can substantially be converted to those. In the travel between the rows of the vehicles, the straddle-type vehicle 100 may travel at the different speed from the vehicle 201 or the vehicle 301, or may travel at the same speed. In the case where the straddle-type vehicle 100 travels between the rows of vehicles at the different speed from the vehicle 201 and the vehicle 301 (for example, when slipping by between the left row of vehicles 200 and the right row of vehicles 300, or the like), the acquisition section 21 acquires the information on the relative distances D201, D301 of the vehicles 201, 301 to the straddle-type vehicle 100 and thereafter acquires information on the relative distance D201 of another vehicle 201 belonging to the left row of vehicles 200 and information on the relative distance D301 of another vehicle 301 belonging to the right row of vehicles 300.

In the case where the information on the relative distances D201, D301, which is acquired by the acquisition section 21, is information indicating that the vehicles 201, 301 exist so close to the straddle-type vehicle 100 that each of the relative distances D201, D301 falls below a reference value, the analysis section 22 determines that the travel state of the straddle-type vehicle 100 is the travel between the rows of vehicles. In the case where the state where the vehicles 201, 301 exist so close to the straddle-type vehicle 100 on both of the left and right sides thereof that each of the relative distances D201, D301 falls below the reference value continues for a specified period or longer, or repeatedly occurs at specified time intervals or shorter for specified times or more, the analysis section 22 may determine that the travel state of the straddle-type vehicle 100 is the travel between the rows of vehicles. In addition, the analysis section 22 may keep determining that the travel state of the straddle-type vehicle 100 is the travel between the rows of vehicles until a state where the vehicles 201, 301 no longer exist so close to the straddle-type vehicle 100 on both of the left and right sides thereof that each of the relative distances D201, D301 falls below the reference value continues for a specified period or longer.

As an example, as illustrated in Fig. 4, in a situation where the straddle-type vehicle 100 travels in a group with other vehicles 110, 301a, 301b in a lane L1, the acquisition section 21 acquires the left target information and the right target information on the basis of the output of the surrounding environment detectors 11c, 11d. The left target information is the information on the target T1 that is located on the left side of the travel line DL of the straddle-type vehicle 100, and the right target information is the information on the targets T2 that are located on the right side of the travel line DL of the straddle-type vehicle 100. As the left target information, the information on the relative distance D201 of the vehicle 201, which travels on the left side of the straddle-type vehicle 100, to the straddle-type vehicle 100 is acquired. As the right target information, information on relative distances D301a, D301b of the vehicles 301a, 301b, each of which travels on the right side of the straddle-type vehicle 100, to the straddle-type vehicle 100 is acquired. As the information on the relative distances D201, D301a, D301b, the acquisition section 21 may acquire distances in the vehicle width direction of the straddle-type vehicle 100, may acquire distances at specified angles with respect to the vehicle width direction thereof, may acquire distances from the center of the straddle-type vehicle 100 in the vehicle width direction, may acquire distances from the lateral surfaces of the straddle-type vehicle 100, may acquire distances to the lateral surfaces of the vehicles 201, 301a, 301b, may acquire distances to the centers of the vehicles 201, 301a, 301b in vehicle width directions thereof, or may acquire other physical quantities that can substantially be converted to those. In the case where a travel row of the straddle-type vehicle 100 in the group travel is on a right side, as the left target information, information on relative distances of at least two vehicles, each of which travels on the left side of the straddle-type vehicle 100, to the straddle-type vehicle 100 only needs to be acquired.

In the case where the information on the relative distances D201, D301a, D301b, which is acquired by the acquisition section 21, is information indicating that the plural vehicles 301a, 301b, the relative distance of each of which to the straddle-type vehicle 100 falls below a reference value, exist on one side of the travel line DL of the straddle-type vehicle 100, the analysis section 22 determines that the travel state of the straddle-type vehicle 100 is the group travel. The reference value is preferably set to a smaller value than the relative distance D201. In addition, the analysis section 22 determines the travel row of the straddle-type vehicle 100 in the group travel by using information on which side of the travel line DL the plural vehicles 301a, 301b exist. In the case where a state where the plural vehicles 301a, 301b, the relative distance of each of which to the straddle-type vehicle 100 falls below the reference value, exist on the one side of the travel line DL of the straddle-type vehicle 100 continues for a specified period or longer, the analysis section 22 may determine that the travel state of the straddle-type vehicle 100 is the group travel. In addition, the analysis section 22 may keep determining that the travel state of the straddle-type vehicle 100 is the group travel until a state where the plural vehicles 301a, 301b, the relative distance of each of which to the straddle-type vehicle 100 falls below the reference value, no longer exist on the one side of the travel line DL of the straddle-type vehicle 100 continues for a specified period or longer.

As an example, as illustrated in Fig. 5, in a situation where the straddle-type vehicle 100 travels on one side in the lane L1, the acquisition section 21 acquires the left target information and the right target information on the basis of the output of the surrounding environment detectors 11c, 11d. The left target information is the information on the target T1 that is located on the left side of the travel line DL of the straddle-type vehicle 100, and the right target information is the information on the target T2 that is located on the right side of the travel line DL of the straddle-type vehicle 100. As the left target information, the information on the relative distance D201 of the vehicle 201, which travels on the left side of the straddle-type vehicle 100, to the straddle-type vehicle 100 is acquired. As the right target information, the information on the relative distance D301 of the vehicle 301, which travels on the right side of the straddle-type vehicle 100, to the straddle-type vehicle 100 is acquired. As the information on the relative distances D201, D301, the acquisition section 21 may acquire the distances in the vehicle width direction of the straddle-type vehicle 100, may acquire the distances at specified angles with respect to the vehicle width direction thereof, may acquire the distances from the center of the straddle-type vehicle 100 in the vehicle width direction, may acquire the distances from the lateral surfaces of the straddle-type vehicle 100, may acquire the distances to the lateral surfaces of the vehicles 201, 301, may acquire the distances to the centers of the vehicles 201, 301 in the vehicle width directions thereof, or may acquire other physical quantities that can substantially be converted to those. In the one-sided travel, the straddle-type vehicle 100 may travel at the different speed from the vehicle 201 or the vehicle 301 or may travel at the same speed. In the case where the straddle-type vehicle 100 makes travels on the one side at the different speed from the vehicle 201 and the vehicle 301, the acquisition section 21 acquires the information on the relative distances D201, D301 of the vehicles 201, 301 to the straddle-type vehicle 100 and thereafter acquires the information on the relative distance D201 of another vehicle 201 traveling in a left lane L2 and the information on the relative distance D301 of another vehicle 301 traveling in a right lane L3. Here, the target T1 may be a road facility (for example, a guardrail, a curbstone, a lane boundary line, or the like), and, as the left target information, information on the relative distance D201 of the straddle-type vehicle 100 to the road facility may be acquired. In addition, the target T2 may be the road facility (for example, the guardrail, the curbstone, the lane boundary line, or the like), and, as the right target information, information on the relative distance D301 of the straddle-type vehicle 100 to the road facility may be acquired.

The analysis section 22 analyzes a travel position of the straddle-type vehicle 100 in the lane L1 (that is, a travel position of the straddle-type vehicle 100 in the vehicle width direction) by using the information on the relative distances D201, D301 acquired by the acquisition section 21. In the case where a shift amount of the travel position from a center of the lane L1 exceeds a reference value, the analysis section 22 may determine that the travel state of the straddle-type vehicle 100 is the one-sided travel, may determine a shift direction, or may determine the shift amount. The analysis section 22 may time-average the information on the relative distances D201, D301, which is acquired by the acquisition section 21, so as to determine the travel position of the straddle-type vehicle 100 in the lane L1. In the case where the targets T1 or the targets T2 are the vehicles, the information on at least one of the relative distances D201, D301 may be acquired for the plural vehicles, and then an average value thereof may be calculated. In the case where the target T1 and the target T2 are a combination of objects, distances of which from lane boundaries tend to differ (for example, in the case where the target T1 is the vehicle 201 and the target T2 is the guardrail or the curbstone, or the like), the information on the relative distances D201, D301, which is acquired by the acquisition section 21, may be corrected by using a general statistical value of the distance from the lane boundary to each of the objects.

As an example, the execution section 23 executes, as the rider-assistance operation, cruise control operation or adaptive cruise control operation of the straddle-type vehicle 100. In the cruise control operation, a behavior controller 30 controls various mechanisms (for example, a brake, an engine, and the like) such that the straddle-type vehicle 100 travels at a target speed set by the rider. In the adaptive cruise control operation, in addition to such control, an inter-vehicular distance from a preceding vehicle is maintained. More specifically, in the adaptive cruise control operation, when the preceding vehicle is not present, the behavior controller 30 controls the various mechanisms (for example, the brake, the engine, and the like) such that the straddle-type vehicle 100 travels at the target speed set by the rider. When the preceding vehicle is present, the behavior controller 30 controls the various mechanisms (for example, the brake, the engine, and the like) such that the straddle-type vehicle 100 travels at a speed which is equal to or lower than the target speed and at which the inter-vehicular distance from the preceding vehicle is maintained. The execution section 23 outputs, to the behavior controller 30, a control command for causing the various mechanisms (for example, the brake, the engine, and the like) to execute the cruise control operation or the adaptive cruise control operation. In the adaptive cruise control operation, the execution section 23 acquires a travel state (for example, a relative distance, a relative speed, relative acceleration, or the like to the straddle-type vehicle 100) of the preceding vehicle on the basis of the output of the surrounding environment detector 11a and sets the target speed. The rider can adjust the inter-vehicular distance from the preceding vehicle.

In the case where the analysis section 22 determines that the travel state of the straddle-type vehicle 100 is the travel between the rows of vehicles (see Fig. 3) during the cruise control operation or the adaptive cruise control operation, the execution section 23 executes the rider-assistance operation corresponding to such a determination. For example, the execution section 23 forcibly cancels or interrupts the cruise control operation or the adaptive cruise control operation. Alternatively, for example, the execution section 23 forcible reduces the target speed in the cruise control operation or the adaptive cruise control operation by a specified amount or to a specified value. Further alternatively, for example, the execution section 23 forcibly switches the adaptive cruise control operation to the cruise control operation. Further alternatively, for example, in the adaptive cruise control operation, the execution section 23 forcibly narrows an area used to determine presence or absence of the preceding vehicle within a detection range of the surrounding environment detector 11a so as to exclude the vehicle 201, which travels ahead, in the left row of vehicles 200 and the vehicle 301, which travels ahead, in the right row of vehicles 300.

In the case where the analysis section 22 determines that the travel state of the straddle-type vehicle 100 is the group travel (see Fig. 4) during the cruise control operation or the adaptive cruise control operation, the execution section 23 executes the rider-assistance operation corresponding to such a determination. For example, in the adaptive cruise control operation, the execution section 23 forcibly widens the area used to determine the presence or the absence of the preceding vehicle within the detection range of the surrounding environment detector 11a so as to include the vehicle 301a, which travels in the group in a different travel row from the travel row, to which the straddle-type vehicle 100 belongs. At the time, the execution section 23 may only widen the area on a side where the vehicle 301a is present (the right side in the example of Fig. 4). In addition, the execution section 23 may narrow the area on a side where the vehicle 301a is absent (the left side in the example of Fig. 4). Furthermore, the execution section 23 forcibly reduces the inter-vehicular distance from the preceding vehicle (that is, the vehicle 301a), which is maintained in the adaptive cruise control operation, by a specified amount or to a specified value.

In the case where the analysis section 22 analyzes the travel position (see Fig. 5) of the straddle-type vehicle 100 during the cruise control operation or the adaptive cruise control operation, the execution section 23 executes the rider-assistance operation corresponding to the analysis result. For example, in the adaptive cruise control operation, the execution section 23 shifts the area used to determine the presence or the absence of the preceding vehicle within the detection range of the surrounding environment detector 11a in a manner to only include the lane L1, in which the straddle-type vehicle 100 travels. The execution section 23 may shift the area according to the shift direction and the shift amount of the travel position of the straddle-type vehicle 100 from the center of the lane L1. In addition, in the case where the shift amount is stabilized for a specified period or longer, the execution section 23 may shift the area. Furthermore, in the case where the shift amount does not exceed the reference value, the execution section 23 may not shift the area.

As an example, the execution section 23 executes, as the rider-assistance operation, frontal collision suppression operation for the straddle-type vehicle 100. When the frontal collision suppression operation is activated, a collision possibility with a target (for example, the vehicle, a person, an animal, an obstacle, a fallen object, or the like) that is located in front of the straddle-type vehicle 100 is determined. Then, when the collision possibility is higher than a reference, a warning device 40 issues a warning. The warning device 40 may issue the warning by sound, may issue the warning by display or lighting, may issue the warning by vibration, or may issue the warning by a combination of any of those. The warning device 40 may generate the vibration as the warning by controlling the various mechanisms (for example, the brake, the engine, and the like) to instantaneously decelerate or accelerate the straddle-type vehicle 100. In order for the straddle-type vehicle 100 to automatically avoid the collision, in the frontal collision suppression operation, the behavior controller 30 may control the various mechanisms (for example, the brake, the engine, and the like). The execution section 23 acquires information on the target located ahead (for example, a relative distance, a relative speed, relative acceleration, and the like to the straddle-type vehicle 100) on the basis of the output of the surrounding environment detector 11a, and determines the collision possibility. The warning device 40 may be provided to the straddle-type vehicle 100, may be provided to an accessory (for example, a helmet, a glove, or the like) associated with the straddle-type vehicle 100, may issue the warning to a driver of another vehicle, or may output a control command to a warning device in another vehicle or an accessory that is associated with another vehicle.

In the case where the analysis section 22 determines that the travel state of the straddle-type vehicle 100 is the travel between the rows of vehicles (see Fig. 3) in a situation where the frontal collision suppression operation is activated, the execution section 23 executes the rider-assistance operation corresponding to such a determination. For example, the execution section 23 forcibly narrows an area used to determine the collision possibility within the detection range of the surrounding environment detector 11a so as to exclude the vehicle 201, which travels ahead, in the left row of vehicles 200 and the vehicle 301, which travels ahead, in the right row of vehicles 300. In addition, for example, the execution section 23 forcibly prohibits the straddle-type vehicle 100 from being decelerated for the warning or avoidance. Furthermore, for example, the execution section 23 forcibly lowers an upper limit value of the deceleration that is generated on the straddle-type vehicle 100 for the warning or the avoidance.

In the case where the analysis section 22 determines that the travel state of the straddle-type vehicle 100 is the group travel (see Fig. 4) in the situation where the frontal collision suppression operation is activated, the execution section 23 executes the rider-assistance operation corresponding to such a determination. For example, the execution section 23 forcibly narrows the area used to determine the collision possibility within the detection range of the surrounding environment detector 11a so as to exclude the vehicle 301a that travels in the group in the different travel row from the travel row, to which the straddle-type vehicle 100 belongs. At the time, the execution section 23 may only narrow the area on a side where the vehicle 301a is present (the right side in the example of Fig. 4). In addition, for example, the execution section 23 forcibly prohibits the straddle-type vehicle 100 from being decelerated for the warning or the avoidance. Furthermore, for example, the execution section 23 forcibly lowers the upper limit value of the deceleration that is generated on the straddle-type vehicle 100 for the warning or the avoidance.

In the case where the analysis section 22 analyzes the travel position (see Fig. 5) of the straddle-type vehicle 100 in the situation where the frontal collision suppression operation is activated, the execution section 23 executes the rider-assistance operation corresponding to the analysis result. For example, the execution section 23 shifts the area used to determine the collision possibility within the detection range of the surrounding environment detector 11a so as to only include the lane L1, in which the straddle-type vehicle 100 travels. The execution section 23 may shift the area according to the shift direction and the shift amount of the travel position of the straddle-type vehicle 100 from the center of the lane L1. In addition, in the case where the shift amount is stabilized for the specified period or longer, the execution section 23 may shift the area. Furthermore, in the case where the shift amount does not exceed the reference value, the execution section 23 may not shift the area.

The rider-assistance operation, which is changed by the execution section 23 according to the determination result by the analysis section 22, may be the collision suppression operation for the target (for example, the vehicle, the fallen object, or the like) that is located behind or on the side of the straddle-type vehicle 100. Also, in such collision suppression operation, the execution section 23 may be operated in a similar manner to that in the frontal collision suppression operation.

As an example, the execution section 23 executes, as the rider-assistance operation, blind spot travel vehicle warning operation for the straddle-type vehicle 100. When the blind spot travel vehicle warning operation is activated, presence or absence of a vehicle that is located diagonally behind the straddle-type vehicle 100 is determined. In the case where such a vehicle is present, the warning device 40 issues the warning. The warning device 40 may issue the warning by sound, may issue the warning by the display or lighting, may issue the warning by the vibration, or may issue the warning by the combination of any of those. The warning device 40 may generate the vibration as the warning by controlling the various mechanisms (for example, the brake, the engine, and the like) to instantaneously decelerate or accelerate the straddle-type vehicle 100. The execution section 23 determines the presence or the absence of the vehicle that is located diagonally behind the straddle-type vehicle 100 on the basis of the output of the surrounding environment detector 11b. Instead of the surrounding environment detector 11b, based on the output of the surrounding environment detectors 11c, 11d, the presence or the absence of the vehicle that is located diagonally behind the straddle-type vehicle 100 may be determined.

In the case where the analysis section 22 determines that the travel state of the straddle-type vehicle 100 is the travel between the rows of vehicles (see Fig. 3) in a situation where the blind spot travel vehicle warning operation is activated, the execution section 23 executes the rider-assistance operation corresponding to such a determination. For example, the execution section 23 forcibly prohibits issuance of the warning. In addition, for example, the execution section 23 forcibly degrades the rider's perception of the warning.

In the case where the analysis section 22 determines that the travel state of the straddle-type vehicle 100 is the group travel (see Fig. 4) in the situation where the blind spot travel vehicle warning operation is activated, the execution section 23 executes the rider-assistance operation corresponding to such a determination. For example, the execution section 23 forcibly prohibits the issuance of the warning. In addition, for example, the execution section 23 forcibly degrades the rider's perception of the warning.

In the case where the analysis section 22 analyzes the travel position (see Fig. 5) of the straddle-type vehicle 100 in the situation where the blind spot travel vehicle warning operation is activated, the execution section 23 executes the rider-assistance operation corresponding to the analysis result. For example, the execution section 23 shifts an area that is used to determine the presence or the absence of the vehicle within a detection range of the surrounding environment detector 11b to an opposite side of the center of the lane L1 in the shift direction from the travel position of the straddle-type vehicle 100. At the time, the execution section 23 may determine an amount to be shifted according to the shift amount. In addition, in the case where the shift amount is stabilized for the specified period or longer, the execution section 23 may shift the area. Furthermore, in the case where the shift amount does not exceed the reference value, the execution section 23 may not shift the area.

### <Operation of Rider-Assistance System>

A description will be made on operation of the rider-assistance system according to the embodiment.

Fig. 6 is a chart illustrating an operation flow of the controller in the rider-assistance system according to the embodiment of the present invention. An order of steps may appropriately be switched, or a different step may appropriately be added.

The controller 20 repeatedly executes the operation flow illustrated in Fig. 6 during the travel of the straddle-type vehicle 100.

### (Acquisition Step)

In step S101, the acquisition section 21 acquires the information on the target that is located around the straddle-type vehicle 100 on the basis of the output of the surrounding environment detectors 11a, 11b, 11c, 11d. In particular, the acquisition section 21 acquires the left target information and the right target information. The left target information is the information on the target T1 that is located on the left side of the travel line DL of the straddle-type vehicle 100, and the right target information is the information on the target T2 that is located on the right side of the travel line DL.

### (Analysis Step)

Next, in step S102, the analysis section 22 analyzes the travel state of the straddle-type vehicle 100 on the basis of at least one of the left target information and the right target information.

### (Execution Step)

Next, in step S103, the execution section 23 executes the rider-assistance operation that corresponds to the analysis result of the travel state by the analysis section 22.

### <Effects of Rider-Assistance System>

A description will be made on effects of the rider-assistance system according to the embodiment.

In the rider-assistance system 1, the left target information, which is the information on the target T1 located on the left side of the travel line DL of the straddle-type vehicle 100, and the right target information, which is the information on the target T2 located on the right side of the travel line DL, are acquired on the basis of the output of the at least one surrounding environment detector (for example, the surrounding environment detectors 11c, 11d). The travel state of the straddle-type vehicle 100 is analyzed on the basis of at least one of the left target information and the right target information. The rider-assistance operation that corresponds to the analysis result is executed. Thus, it is possible to appropriately handle the special travel made by the straddle-type vehicle 100.

Preferably, the left target information is the information on the relative distance of the at least one vehicle (201 in the examples illustrated in Fig. 3 to Fig. 5), which is located on the left side of the travel line DL, to the straddle-type vehicle 100, and the right target information is the information on the relative distance of the at least one vehicle (301, 301a, 301b in the examples illustrated in Fig. 3 to Fig. 5), which is located on the right side of the travel line DL, to the straddle-type vehicle 100. With such a configuration, the special travel made by the straddle-type vehicle 100 is further appropriately handled. In particular, the information on the relative distance is preferably information on the relative distance (D201, D301, D301a, D301b in the examples illustrated in Fig. 3 to Fig. 5) in the vehicle width direction of the straddle-type vehicle 100. With such a configuration, the special travel made by the straddle-type vehicle 100 is further reliably handled.

Preferably, the left target information is acquired on the basis of the output of the surrounding environment detector 11c that has the detection range Rc, and the right target information is acquired on the basis of the output of the surrounding environment detector 11d that has the detection range Rd. That is, the left target information and the right target information are acquired by the different detectors. With such a configuration, inclusion of an unnecessary area in the detection range is suppressed, which reduces a calculation processing load, improves accuracy of the information, and the like, for example. In particular, preferably, the surrounding environment detector 11c is oriented to just the left side of the straddle-type vehicle 100, and the surrounding environment detector 11d is oriented to just the right side of the straddle-type vehicle 100. With such a configuration, the accurate information is acquired.

Preferably, the analysis section 22 analyzes the presence or the absence of the travel of the straddle-type vehicle 100 between the rows of vehicles on the basis of the left target information and the right target information that are acquired by the acquisition section 21. With such a configuration, it is possible to execute the rider-assistance operation, which corresponds to the travel state unique to the straddle-type vehicle 100, that is, the travel between the rows of vehicles that can be made due to significantly small size of the straddle-type vehicle 100.

Preferably, the analysis section 22 analyzes the presence or the absence of the group travel of the straddle-type vehicle 100 on the basis of at least one of the left target information and the right target information that are acquired by the acquisition section 21. With such a configuration, it is possible to execute the rider-assistance operation, which corresponds to the travel state unique to the straddle-type vehicle 100, that is, the high-density group travel that can be made due to the significantly small size of the straddle-type vehicle 100. In particular, preferably, the analysis section 22 analyzes the travel row of the straddle-type vehicle 100 in the group travel on the basis of at least one of the left target information and the right target information that are acquired by the acquisition section 21. With such a configuration, it is possible to execute the rider-assistance operation, which corresponds to the travel state unique to the straddle-type vehicle 100, that is, the staggered group travel that can be made due to the significantly small size of the straddle-type vehicle 100.

Preferably, the analysis section 22 analyzes the travel position of the straddle-type vehicle 100 in the lane L1 on the basis of the left target information and the right target information that are acquired by the acquisition section 21. With such a configuration, it is possible to execute the rider-assistance operation, which corresponds to the travel state unique to the straddle-type vehicle 100, that is, the travel at the position that is significantly shifted from the center of the lane L1 and can be made due to the significantly small size of the straddle-type vehicle 100. In particular, the analysis section 22 analyzes the shift direction and the shift amount of the travel position from the center of the lane L1 on the basis of the left target information and the right target information that are acquired by the acquisition section 21. With such a configuration, it is possible to reliably handle the travel at the position that is significantly shifted from the center of the lane L1.

Preferably, the execution section 23 changes the cruise control operation or the adaptive cruise control operation of the straddle-type vehicle 100 according to the analysis result of the travel state by the analysis section 22. In addition, the execution section 23 changes the collision suppression operation of the straddle-type vehicle 100 according to the analysis result of the travel state by the analysis section 22. Furthermore, the execution section 23 changes the blind spot travel vehicle warning operation of the straddle-type vehicle 100 according to the analysis result of the travel state by the analysis section 22. In those types of the operations, necessity of using the appropriate information is especially high. That is, it is particularly useful in those types of the operations to analyze the travel state of the straddle-type vehicle 100 on the basis of the left target information and the right target information.

The embodiment of the present invention is not limited to that in the above description. That is, the present invention includes modes in each of which the embodiment that has been described so far is modified. In addition, the present invention includes a mode in which the embodiment that has been described so far is only partially implemented or a mode in which the modes are combined.

### Reference Signs List

1: Rider-assistance system
11a, 11b, 11c, 11d: Surrounding environment detector
12: Travel state detector
20: Controller
21: Acquisition section
22: Analysis section
23: Execution section
30: Behavior controller
40: Warning device
100: Straddle-type vehicle
200, 300: Row of vehicles
110, 201, 301, 301a, 301b: Vehicle
T1, T2: Target
DL: Travel line
L1, L2, L3: Lane
Rc, Rd: Detection range

## Claims

1. A controller (20) for a straddle-type vehicle (100), to which at least one surrounding environment detector (11a, 11b, 11c, 11d) is mounted, the controller (20) comprising:
an execution section (23) that is configured to execute rider-assistance operation to assist with a rider of the straddle-type vehicle (100), and further comprising:
an acquisition section (21) that is configured to acquire left target information and right target information on the basis of output of the surrounding environment detector (11a, 11b, 11c, 11d), the left target information being information on a target (T1) that is located on a left side of a travel line (DL) of the straddle-type vehicle (100) and the right target information being information on a target (T2) that is located on a right side of the travel line (DL); and
an analysis section (22) that is configured to analyze a travel state of the straddle-type vehicle (100) on the basis of at least one of the left target information and the right target information that are acquired by the acquisition section (21), wherein
the analysis section (22) is configured to analyze, as the travel state, a travel position of the straddle-type vehicle (100) in a lane (L1), and a shift direction and a shift amount of the travel position from a center of the lane (L1), on the basis of the left target information and the right target information that are acquired by the acquisition section (21),
the execution section (23) is configured to execute the rider-assistance operation that corresponds to an analysis result of the travel state by the analysis section (22), and
the execution section (23) is configured to shift an area used for the rider-assistance operation within a detection range of the surrounding environment detector (11a, 11b, 11c, 11d) according to the shift direction and the shift amount of the travel position from the center of the lane (L1).

2. The controller (20) according to claim 1, wherein
the left target information is information on a relative distance of at least one vehicle (201) that is located on the left side of the travel line (DL) to the straddle-type vehicle (100), and
the right target information is information on a relative distance of at least one vehicle (301, 301a, 301b) that is located on the right side of the travel line (DL) to the straddle-type vehicle (100).

3. The controller (20) according to claim 2, wherein
the information on the relative distance is information on a relative distance (D201, D301, D301a, D301b) in a vehicle width direction of the straddle-type vehicle (100).

4. The controller (20) according to any one of claims 1 to 3, wherein
the left target information is acquired on the basis of output of a first surrounding environment detector (11c) that is the surrounding environment detector having a first detection range (Rc), and
the right target information is acquired on the basis of output of a second surrounding environment detector (11d) that is the surrounding environment detector having a second detection range (Rd) differing from the first detection range (Rc).

5. The controller (20) according to claim 4, wherein
the first surrounding environment detector (11c) is oriented to just a left side of the straddle-type vehicle (100), and
the second surrounding environment detector (11d) is oriented to just a right side of the straddle-type vehicle (100).

6. The controller (20) according to any one of claims 1 to 5, wherein
the execution section (23) is configured to change cruise control operation or adaptive cruise control operation for the straddle-type vehicle (100), which is executed as the rider-assistance operation, according to the analysis result of the travel state by the analysis section (22).

7. The controller (20) according to any one of claims 1 to 6, wherein
the execution section (23) is configured to change collision suppression operation for the straddle-type vehicle (100), which is executed as the rider-assistance operation, according to the analysis result of the travel state by the analysis section (22).

8. The controller (20) according to any one of claims 1 to 7, wherein
the execution section (23) is configured to change blind spot travel vehicle warning operation for the straddle-type vehicle (100), which is executed as the rider-assistance operation, according to the analysis result of the travel state by the analysis section (22).

9. A rider-assistance system (1) comprising:
the controller (20) according to any one of claims 1 to 8.

10. A control method for a straddle-type vehicle (100), to which at least one surrounding environment detector (11a, 11b, 11c, 11d) is mounted, the control method comprising:
an execution step (S103) in which an execution section (23) of a controller (20) executes rider-assistance operation to assist with a rider of the straddle-type vehicle (100), and further comprising:
an acquisition step (S101) in which an acquisition section (21) of the controller (20) acquires left target information and right target information on the basis of output of the surrounding environment detector (11a, 11b, 11c, 11d), the left target information being information on a target (T1) that is located on a left side of a travel line (DL) of the straddle-type vehicle (100) and the right target information being information on a target (T2) that is located on a right side of the travel line (DL); and
an analysis step (S102) in which an analysis section (22) of the controller (20) analyzes a travel state of the straddle-type vehicle (100) on the basis of at least one of the left target information and the right target information that are acquired in the acquisition step (S101), wherein
in the analysis step (S102), the analysis section (22) analyzes, as the travel state, a travel position of the straddle-type vehicle (100) in a lane (L1), and a shift direction and a shift amount of the travel position from a center of the lane (L1), on the basis of the left target information and the right target information that are acquired by the acquisition section (21),
in the execution step (S103), the execution section (23) executes the rider-assistance operation that corresponds to an analysis result of the travel state in the analysis step (S102), and
in the execution step (S103), the execution section (23) shifts an area used for the rider-assistance operation within a detection range of the surrounding environment detector (11a, 11b, 11c, 11d) according to the shift direction and the shift amount of the travel position from the center of the lane (L1).

## Patentansprüche

1. Steuerung (20) für ein Grätschsitzfahrzeug (100), an dem mindestens ein Peripherieumgebungsdetektor (11a, 11b, 11c, 11d) angebracht ist, die Steuerung (20) umfassend:
einen Ausführungsabschnitt (23), der dazu ausgelegt ist, einen Fahrerassistenzvorgang auszuführen, um einen Fahrer des Grätschsitzfahrzeugs (100) zu unterstützen, und ferner umfassend:
einen Erfassungsabschnitt (21), der dazu ausgelegt ist, linke Zielinformationen und rechte Zielinformationen auf der Grundlage einer Ausgabe des Peripherieumgebungsdetektors (11a, 11b, 11c, 11d) zu erfassen, wobei die linken Zielinformationen Informationen über ein Ziel (T1), das sich auf einer linken Seite einer Fahrlinie (DL) des Grätschsitzfahrzeugs (100) befindet, sind und die rechten Zielinformationen Informationen über ein Ziel (T2), das sich auf einer rechten Seite der Fahrlinie (DL) befindet, sind; und
einen Analyseabschnitt (22), der dazu ausgelegt ist, einen Fahrzustand des Grätschsitzfahrzeugs (100) auf der Grundlage der linken Zielinformationen und/oder der rechten Zielinformationen, die durch den Erfassungsabschnitt (21) erfasst werden, zu analysieren, wobei
der Analyseabschnitt (22) dazu ausgelegt ist, als den Fahrzustand eine Fahrposition des Grätschsitzfahrzeugs (100) in einer Fahrspur (L1) und eine Verschieberichtung und einen Verschiebebetrag der Fahrposition von einer Mitte der Fahrspur (L1) basierend auf den linken Zielinformationen und den rechten Zielinformationen, die durch den Erfassungsabschnitt (21) erfasst werden, zu analysieren,
der Ausführungsabschnitt (23) den Fahrerassistenzvorgang ausführt, der einem Analyseergebnis des Fahrzustands durch den Analyseabschnitt (22) entspricht, und
der Ausführungsabschnitt (23) dazu ausgelegt ist, einen Bereich, der für den Fahrerassistenzvorgang verwendet wird, innerhalb eines Detektionsbereichs des Umgebungsdetektors (11a, 11b, 11c, 11d) gemäß der Verschieberichtung und dem Verschiebebetrag der Fahrposition von der Mitte der Fahrspur (L1) zu verschieben.

2. Steuerung (20) nach Anspruch 1, wobei
die linken Zielinformationen Informationen über einen relativen Abstand von mindestens einem Fahrzeug (201), das sich auf der linken Seite der Fahrlinie (DL) in Bezug auf das Grätschsitzfahrzeug (100) befindet, sind und
die rechten Zielinformationen Informationen über einen relativen Abstand von mindestens einem Fahrzeug (301, 301a, 301b), das sich auf der rechten Seite der Fahrlinie (DL) in Bezug auf das Grätschsitzfahrzeug (100) befindet, sind.

3. Steuerung (20) nach Anspruch 2, wobei
die Informationen über den relativen Abstand Informationen über einen relativen Abstand (D201, D301, D301a, D301b) in einer Fahrzeugbreitenrichtung des Grätschsitzfahrzeugs (100) sind.

4. Steuerung (20) nach einem der Ansprüche 1 bis 3, wobei
die linken Zielinformationen basierend auf einer Ausgabe eines ersten Peripherieumgebungsdetektors (11c), der der Peripherieumgebungsdetektor mit einem ersten Detektionsbereich (Rc) ist, erfasst werden und
die rechten Zielinformationen basierend auf einer Ausgabe eines zweiten Peripherieumgebungsdetektors (11d), der der Peripherieumgebungsdetektor mit einem zweiten Detektionsbereich (Rd) ist, der sich von dem ersten Detektionsbereich (Rc) unterscheidet, erfasst werden.

5. Steuerung (20) nach Anspruch 4, wobei
der erste Peripherieumgebungsdetektor (11c) nur zu einer linken Seite des Grätschsitzfahrzeugs (100) hin ausgerichtet ist, und
der zweite Peripherieumgebungsdetektor (11d) nur zu einer rechten Seite des Grätschsitzfahrzeugs (100) hin ausgerichtet ist.

6. Steuerung (20) nach einem der Ansprüche 1 bis 5, wobei
der Ausführungsabschnitt (23) ausgelegt ist, den als Fahrerassistenzvorgang ausgeführten Geschwindigkeitsregelungsvorgang bzw. adaptiven Geschwindigkeitsregelungsvorgang für das Grätschsitzfahrzeug (100) gemäß dem Analyseergebnis des Fahrzustands durch den Analyseabschnitt (22) zu ändern.

7. Steuerung (20) nach einem der Ansprüche 1 bis 6, wobei
der Ausführungsabschnitt (23) ausgelegt ist, den als den Fahrerassistenzvorgang ausgeführten Kollisionsunterdrückungsbetrieb für das Grätschsitzfahrzeug (100) gemäß dem Analyseergebnis des Fahrzustands durch den Analyseabschnitt (22) zu ändern.

8. Steuerung (20) nach einem der Ansprüche 1 bis 7, wobei
der Ausführungsabschnitt (23) ausgelegt ist, den als Fahrerassistenzvorgang ausgeführten Totwinkelfahrzeugwarnbetrieb für das Grätschsitzfahrzeug (100) gemäß dem Analyseergebnis des Fahrzustands durch den Analyseabschnitt (22) zu ändern.

9. Fahrerassistenzsystem (1), umfassend:
die Steuerung (20) nach einem der Ansprüche 1 bis 8.

10. Steuerverfahren für ein Grätschsitzfahrzeug (100), an dem mindestens ein Peripherieumgebungsdetektor (11a, 11b, 11c, 11d) angebracht ist, das Steuerverfahren umfassend:
einen Ausführungsschritt (S103), in dem ein Ausführungsabschnitt (23) einer Steuerung (20) einen Fahrerassistenzvorgang ausführt, um einen Fahrer des Grätschsitzfahrzeugs (100) zu unterstützen, und ferner umfassend:
einen Erfassungsschritt (S101), in dem ein Erfassungsabschnitt (21) der Steuerung (20) linke Zielinformationen und rechte Zielinformationen auf der Grundlage einer Ausgabe des Peripherieumgebungsdetektors (11a, 11b, 11c, 11d) erfasst, wobei die linken Zielinformationen Informationen über ein Ziel (T1), das sich auf einer linken Seite einer Fahrlinie (DL) des Grätschsitzfahrzeugs (100) befindet sind und die rechten Zielinformationen Informationen über ein Ziel (T2), das sich auf einer rechten Seite der Fahrlinie (DL) befindet, sind; und
einen Analyseschritt (S102), in dem ein Analyseabschnitt (22) der Steuerung (20) einen Fahrzustand des Grätschsitzfahrzeugs (100) auf der Grundlage der linken Zielinformationen und/oder der rechten Zielinformationen, die im Erfassungsschritt (S101) erfasst werden, analysiert, wobei
in dem Analyseschritt (S102) der Analyseabschnitt (22) als den Fahrzustand eine Fahrposition des Grätschsitzfahrzeugs (100) in einer Fahrspur (L1) und eine Verschieberichtung und einen Verschiebebetrag der Fahrposition von einer Mitte der Fahrspur (L1) basierend auf den linken Zielinformationen und den rechten Zielinformationen, die durch den Erfassungsabschnitt (21) erfasst werden, analysiert,
in dem Ausführungsabschnitt (S103) der Ausführungsabschnitt (23) den Fahrerassistenzvorgang, der einem Analyseergebnis des Fahrzustands in dem Analyseschritt (S102) entspricht, ausführt.
in dem Ausführungsschritt (S103) der Ausführungsabschnitt (23) einen Bereich, der für den Fahrerassistenzvorgang verwendet wird, innerhalb eines Detektionsbereichs des Umgebungsdetektors (11a, 11b, 11c, 11d) gemäß der Verschieberichtung und dem Verschiebebetrag der Fahrposition von der Mitte der Fahrspur (L1) verschiebt.

## Revendications

1. Dispositif de commande (20) pour un véhicule à enfourcher (100), sur lequel au moins un détecteur d'environnement avoisinant (11a, 11b, 11c, 11d) est monté, le dispositif de commande (20) comprenant :
une section d'exécution (23) qui est configurée pour exécuter une opération d'aide au conducteur pour assister un conducteur du véhicule à enfourcher (100), et comprenant en outre :
une section d'acquisition (21) qui est configurée pour acquérir des informations de cible gauche et des informations de cible droite sur la base de la sortie du détecteur d'environnement avoisinant (11a, 11b, 11c, 11d), les informations de cible gauche étant des informations sur une cible (T1) qui est située sur un côté gauche d'une ligne de déplacement (DL) du véhicule à enfourcher (100) et les informations de cible droite étant des informations sur une cible (T2) qui est située sur un côté droit de la ligne de déplacement (DL) ; et
une section d'analyse (22) qui est configurée pour analyser un état de déplacement du véhicule à enfourcher (100) sur la base d'au moins l'une des informations de cible gauche et des informations de cible droite qui sont acquises par la section d'acquisition (21), dans lequel
la section d'analyse (22) est configurée pour analyser, en tant qu'état de déplacement, une position de déplacement du véhicule à enfourcher (100) dans une voie (L1), ainsi qu'une direction de décalage et une quantité de décalage de la position de déplacement par rapport à un centre de la voie (L1), sur la base des informations de cible gauche et des informations de cible droite qui sont acquises par la section d'acquisition (21),
la section d'exécution (23) est configurée pour exécuter l'opération d'aide au conducteur qui correspond à un résultat d'analyse de l'état de déplacement par la section d'analyse (22), et
la section d'exécution (23) est configurée pour décaler une zone utilisée pour l'opération d'aide au conducteur à l'intérieur d'une portée de détection du détecteur d'environnement avoisinant (11a, 11b, 11c, 11d) en fonction de la direction de décalage et de la quantité de décalage de la position de déplacement par rapport au centre de la voie (L1).

2. Dispositif de commande (20) selon la revendication 1, dans lequel
les informations de cible gauche sont des informations sur une distance relative d'au moins un véhicule (201) qui est situé sur le côté gauche de la ligne de déplacement (DL) par rapport au véhicule à enfourcher (100), et
les informations de cible droite sont des informations sur une distance relative d'au moins un véhicule (301, 301a, 301b) qui est situé sur le côté droit de la ligne de déplacement (DL) par rapport au véhicule à enfourcher (100).

3. Dispositif de commande (20) selon la revendication 2, dans lequel
les informations sur la distance relative sont des informations sur une distance relative (D201, D301, D301a, D301b) dans un sens de la largeur de véhicule du véhicule à enfourcher (100).

4. Dispositif de commande (20) selon l'une quelconque des revendications 1 à 3, dans lequel
les informations de cible gauche sont acquises sur la base de la sortie d'un premier détecteur d'environnement avoisinant (11c) qui est le détecteur d'environnement avoisinant ayant une première portée de détection (Rc), et
les informations de cible droite sont acquises sur la base de la sortie d'un deuxième détecteur d'environnement avoisinant (11d) qui est le détecteur d'environnement avoisinant ayant une deuxième portée de détection (Rd) différente de la première portée de détection (Rc).

5. Dispositif de commande (20) selon la revendication 4, dans lequel
le premier détecteur d'environnement avoisinant (11c) est orienté vers un côté gauche seulement du véhicule à enfourcher (100), et
le deuxième détecteur d'environnement avoisinant (11d) est orienté vers un côté droit seulement du véhicule à enfourcher (100).

6. Dispositif de commande (20) selon l'une quelconque des revendications 1 à 5, dans lequel
la section d'exécution (23) est configurée pour modifier le fonctionnement du régulateur de vitesse ou le fonctionnement du régulateur de vitesse adaptatif pour le véhicule à enfourcher (100), qui est exécuté comme opération d'aide au conducteur, en fonction du résultat d'analyse de l'état de déplacement par la section d'analyse (22).

7. Dispositif de commande (20) selon l'une quelconque des revendications 1 à 6, dans lequel
la section d'exécution (23) est configurée pour modifier le fonctionnement de la suppression de collision pour le véhicule à enfourcher (100), qui est exécuté comme opération d'aide au conducteur, en fonction du résultat d'analyse de l'état de déplacement par la section d'analyse (22).

8. Dispositif de commande (20) selon l'une quelconque des revendications 1 à 7, dans lequel
la section d'exécution (23) est configurée pour modifier le fonctionnement d'avertissement relatif à un véhicule se déplaçant dans un angle mort pour le véhicule à enfourcher (100), qui est exécuté comme opération d'aide au conducteur, en fonction du résultat d'analyse de l'état de déplacement par la section d'analyse (22).

9. Système d'aide au conducteur (1) comprenant :
le dispositif de commande (20) selon l'une quelconque des revendications 1 à 8.

10. Procédé de commande pour un véhicule à enfourcher (100), sur lequel au moins un détecteur d'environnement avoisinant (11a, 11b, 11c, 11d) est monté, le procédé de commande comprenant :
une étape d'exécution (S103) au cours de laquelle une section d'exécution (23) d'un dispositif de commande (20) exécute une opération d'aide au conducteur pour assister un conducteur du véhicule à enfourcher (100), et comprenant en outre :
une étape d'acquisition (S101) au cours de laquelle une section d'acquisition (21) du dispositif de commande (20) acquiert des informations de cible gauche et des informations de cible droite sur la base de la sortie du détecteur d'environnement avoisinant (11a, 11b, 11c, 11d), les informations de cible gauche étant des informations sur une cible (T1) qui est située sur un côté gauche d'une ligne de déplacement (DL) du véhicule à enfourcher (100) et les informations de cible droite étant des informations sur une cible (T2) qui est située sur un côté droit de la ligne de déplacement (DL) ; et
une étape d'analyse (S102) au cours de laquelle une section d'analyse (22) du dispositif de commande (20) analyse un état de déplacement du véhicule à enfourcher (100) sur la base d'au moins l'une des informations de cible gauche et des informations de cible droite qui sont acquises lors de l'étape d'acquisition (S101), dans lequel
lors de l'étape d'analyse (S102), la section d'analyse (22) analyse, en tant qu'état de déplacement, une position de déplacement du véhicule à enfourcher (100) dans une voie (L1), ainsi qu'une direction de décalage et une quantité de décalage de la position de déplacement par rapport à un centre de la voie (L1), sur la base des informations de cible gauche et des informations de cible droite qui sont acquises par la section d'acquisition (21),
lors de l'étape d'exécution (S103), la section d'exécution (23) exécute l'opération d'aide au conducteur qui correspond à un résultat d'analyse de l'état de déplacement lors de l'étape d'analyse (S102), et
lors de l'étape d'exécution (S103), la section d'exécution (23) décale une zone utilisée pour l'opération d'aide au conducteur à l'intérieur d'une portée de détection du détecteur d'environnement avoisinant (11a, 11b, 11c, 11d) en fonction de la direction de décalage et de la quantité de décalage de la position de déplacement par rapport au centre de la voie (L1).
